# FASCICULE DE BREVET EUROPEEN

(11) **EP 2 611 706 B1**
(45) Date de publication et mention de la délivrance du brevet: **14.10.2015**
(21) Numéro de dépôt: 11758518.2
(22) Date de dépôt: 18.08.2011
(51) Int. Cl.: B65D 23/08, B65D 85/30, B29C 45/44, B65D 65/16, B29C 33/44

(54) **MOULE POUR LA FABRICATION PAR INJECTION D'UNE GAINE POUR UN CONTENANT TEL QU'UNE BOUTEILLE OU UN FLACON, ET PROCÉDÉ DE MOULAGE UTILISANT UN TEL MOULE**
FORM ZUR HERSTELLUNG EINER HÜLLE FÜR EINEN BEHÄLTER WIE EINE FLASCHE ODER EINEN FLAKON MITTELS SPRITZGUSSVERFAHREN, UND FORMVERFAHREN MIT EINER DERARTIGEN FORM
MOLD FOR MANUFACTURING, BY MEANS OF INJECTION, A SLEEVE FOR A CONTAINER SUCH AS A BOTTLE OR A FLASK, AND MOLDING METHOD USING SUCH A MOLD

(30) Priorité: 20.08.2010 FR 1056693
(43) Date de publication de la demande: 10.07.2013
(73) Titulaire: Worldplas, 25000 Besancon (FR)
(72) Inventeur: GUNES, Denis, F-25000 Besancon (FR)
(74) Mandataire: Poupon, Michel
(86) Numéro de dépôt international: PCT/FR2011/051928
(87) Numéro de publication internationale: WO 2012/022918

(56) Documents cités:
- WO-A1-2006/054338
- FR-A1- 2 130 012
- US-A- 2 330 762

## Description

### Domaine technique et état de l'art

L'invention concerne un moule pour la fabrication d' une gaine pour un contenant, par exemple de type bouteille ou flacon, et un procédé pour l'obtention d'une telle gaine.

Une telle gaine est réalisée en plastique souple. Elle a la forme du contenant, et peut être enfilée sur le contenant à la façon d'une chaussette. Une telle gaine sert à protéger le contenant qu'elle recouvre, notamment contre les chocs et les rayonnements lumineux. Une telle gaine peut également être marquée ou décorée pour améliorer l'aspect esthétique du contenant.

Le document US 2 330 762 A divulgue un moule pour la fabrication d'une gaine pour un contenant, le moule comprenant et une partie mobile comprenant un noyau de forme générale similaire à celle du contenant, la matrice présentant un évidement débouchant sur une ouverture de la face principale, ouverture par laquelle le noyau est inséré pour fermer le moule, l'évidement ayant une forme générale inverse de la forme générale du noyau et a des dimensions appropriées pour contenir le noyau, la matrice présente des empreintes débouchant dans l'évidement et sur la face principale, les dites empreintes s'étendant depuis une circonférence de l'ouverture dans un plan sensiblement parallèle à la face principale,

Il est connu de réaliser une telle gaine par moulage par injection plastique à l'aide d'un moule comprenant un noyau et une matrice. La matrice est constituée de deux demi-coquilles qui sont verrouillées entre elles pendant la phase d'injection, puis déverrouillées pour démouler l'extérieure de la gaine. La gaine est ensuite retournée à la main sur le noyau pour enlever le noyau de l'intérieur de la gaine.

Un inconvénient de ce procédé de fabrication est la présence de plan de joint sur la gaine finie, au niveau du raccord entre des deux demi-coquilles. Un autre inconvénient est la nécessité de retirer à la main la gaine du noyau, ce qui limite fortement les possibilités d'industrialisation du procédé.

### Description de l'invention

L'invention propose un nouveau moule ne présentant pas un ou plusieurs des inconvénients des moules antérieurs. Plus précisément, l'invention propose un moule pour la fabrication d'une gaine pour un contenant, par exemple une bouteille ou un flacon ; le moule comprend une matrice comprenant une face principale et une partie mobile comprenant un noyau de forme générale similaire à celle du contenant, la matrice présente un évidement débouchant sur une ouverture de la face principale, ouverture par laquelle le noyau est inséré pour fermer le moule, et l'évidement a une forme générale inverse de la forme générale du noyau et a des dimensions appropriées pour contenir le noyau, et la matrice présente des empreintes débouchant dans l'évidement et sur la face principale, les dites empreintes s'étendant depuis une circonférence de l'ouverture dans un plan sensiblement parallèle à la face principale. Le moule selon l'invention est caractérisé en ce que :
- la matrice comprend également une bague s'étendant dans un plan sensiblement parallèle à la face principale, la dite bague comprenant des créneaux sur une circonférence de la bague, la dite bague étant montée rotative entre une position ouverte dans laquelle les créneaux de la bague se superposent aux empreintes de la matrice et une position fermée dans laquelle les créneaux sont décalés par rapport aux empreintes de la matrice, de sorte à obturer partiellement les empreintes.

Les empreintes sont fermées lors du moulage et du démoulage de la gaine. Après démoulage, les empreintes sont ouvertes pour libérer la gaine moulée. Parce qu'elles sont fermées lors du moulage, les empreintes se remplissent de matériau de moulage pour former une gaine comprenant des ailettes à sa base. Les empreintes étant fermées lors du démoulage, les ailettes à la base de la gaine restent bloquées sur la matrice du moule de sorte que le retrait du noyau va entraîner automatiquement un retournement de la gaine comme on le verra mieux plus loin dans des exemples. Ainsi, avec un moule selon l'invention, il n'est plus nécessaire de retirer à la main la gaine du noyau. La rotation de la bague peut être automatisée, et le retournement de la gaine est automatique à l'ouverture du moule. Le moule selon l'invention peut ainsi être industrialisé pour fabriquer de grandes séries de gaines.

Selon un mode de réalisation, la matrice est réalisée d'une seule pièce. Ainsi, la matrice d'un moule selon l'invention est réalisée monobloc et présente un évidement de taille et de forme adaptées à la forme du noyau, la forme et la taille du noyau étant elles-mêmes adaptées à la forme du contenant. La gaine moulée ne présente ainsi pas de plan de joint.

La matrice peut comprendre 4 à 12 empreintes, réparties de préférence sur le pourtour de l'ouverture de l'évidement. Le choix du nombre d'ailettes est un compromis en fonction de la résistance mécanique du matériau utilisé pour réaliser la gaine et les contraintes mécaniques pour la réalisation du moule. Les ailettes et / ou la gaine risquent de se déchirer lors du démoulage si le nombre d'empreintes est trop petit ou si les empreintes sont mal réparties. Inversement, la bague ne peut pas tourner suffisamment pour libérer les ailettes de la gaine si le nombre d'empreintes est trop grand. Des essais ont montré que huit empreintes est un bon compromis. La forme des ailettes est indifférente, toute forme d'ailette peut être envisagée ; les ailettes doivent simplement être suffisamment résistantes pour permettre de tirer sur la gaine pour la retourner lors du démoulage.

Selon un mode de réalisation, la partie mobile du moule comprend une partie sensiblement plane destinée venir en appui sur la face principale lorsque le noyau est inséré dans l'évidement de la matrice et dans lequel le noyau comprend une base fixée à la partie plane, un corps et un col.

De préférence, la base du noyau présente une contre-dépouille, qui permet d'obtenir une surépaisseur de matériau sur la gaine, localement au voisinage de la base de la gaine. Cette surépaisseur évite que la base de la gaine ne s'évase, et permet à la gaine de mieux épouser la forme du flacon, dont la base est généralement arrondie pour éviter les bords vifs, plus fragiles.

De préférence également, un jeu entre la matrice et le noyau au voisinage du col du noyau est supérieur à un jeu entre la matrice et le noyau au voisinage du corps du noyau. On obtient ainsi une gaine présentant une surépaisseur au niveau de l'extrémité du col. Cette surépaisseur permet d'obtenir un nappage de la gaine et évite la formation d'une ligne de soudure sur le bord extérieur du col de la gaine.

En complément, un trou d'injection de la matrice peut déboucher au voisinage du col du noyau lorsque le moule est fermé, et de préférence là où le jeu entre la matrice et le noyau est le plus important. Ainsi, une éventuelle bavure sur la gaine finie au niveau du point d'injection est masquée par la surépaisseur de la gaine.

Le jeu entre le noyau et la matrice lorsque le noyau est inséré dans la matrice est de l'ordre de 0.1 à 3 mm, en fonction de l'épaisseur souhaitée de la gaine, des caractéristiques du matériau de moulage choisies, et des contraintes mécaniques liées au procédé d'injection.

Il est également possible de définir un marquage sur une surface externe du noyau. Le marquage apparaître ensuite sur la face externe de la gaine, une fois la gaine retournée. Le marquage est par exemple gravé en creux ou en relief sur la face externe du noyau, ou bien défini par une différence de grain entre la surface marquée et le reste de la surface du noyau. Le marquage peut correspondre à une marque, à un dessin, à un décor, etc. L'avantage d'un marquage directement sur le noyau est que, pour changer de marquage pour des flacons de même format, il n'est pas nécessaire de remplacer complètement le moule, modifier le noyau est suffisant, la matrice peut rester inchangée. Dans le même esprit, il est possible de creuser de petits évidements sur la face externe du noyau. Une gaine moulée avec un tel noyau comprend sur sa face externe de petits picots en relief. La forme et la répartition des picots modifient l'esthétisme de la gaine finie, mais renforcent également les capacités de la gaine à protéger (contre les chocs notamment) le contenant qu'elle va recouvrir.

Une gaine selon l'invention peut également être marquée après sa réalisation par différentes techniques connues, par exemple :
- soudure d'un décor (par exemple une étiquette papier ou plastique) sur la gaine par transfert thermique ou par ultrason,
- étiquette cylindrique thermorétractable positionnée sur la gaine puis chauffée

Une gaine pour contenant, par exemple de type bouteille ou flacon, peut être obtenue par un procédé d'injection plastique avec un moule tel que décrit ci-dessus. La gaine obtenue est suffisamment élastique pour être enfilée sur une bouteille, et plus particulièrement sur le col d'une bouteille, même si la bouteille est fermée par un bouchon. Outre ses fonctions de protection de la bouteille contre les chocs et les ultraviolets, la gaine peut permettre de personnaliser une bouteille ou un flacon le plus tard possible, et par exemple bien après le remplissage et éventuellement le bouchage de la bouteille.

L'invention concerne enfin un procédé de moulage par injection plastique d'une gaine pour un contenant, par exemple de type bouteille ou flacon, caractérisé en ce qu'il comprend les étapes suivantes :
- fermeture d'une bague d'un moule selon l'invention et tel que décrit ci-dessus, et fermeture du moule,
- injection d'une matière plastique dans le moule,
- ouverture du moule et retrait du noyau de la matrice, et
- ouverture de la bague pour libérer la gaine moulée.

Comme on l'a vu plus haut, le moule selon l'invention permet une mise en oeuvre industrielle et à grande échelle du procédé selon l'invention.

### Brève description des Usures

L'invention sera mieux comprise, et d'autres caractéristiques et avantages de l'invention apparaîtront à la lumière de la description qui suit d'un exemple de moule selon l'invention. Cet exemple est donné à titre non limitatif. La description est à lire en relation avec les dessins annexés dans lesquels :

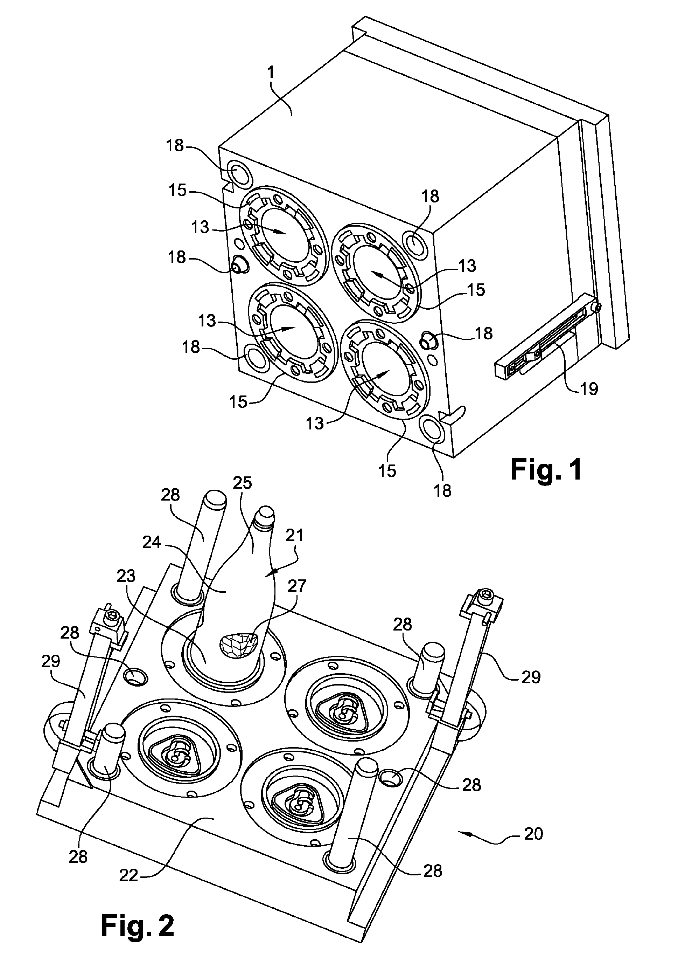

- la figure 1 est une vue isométrique d'une partie fixe d'un moule selon l'invention
- la figure 2 est une vue isométrique d'une partie mobile associée à la matrice de la figure 1,

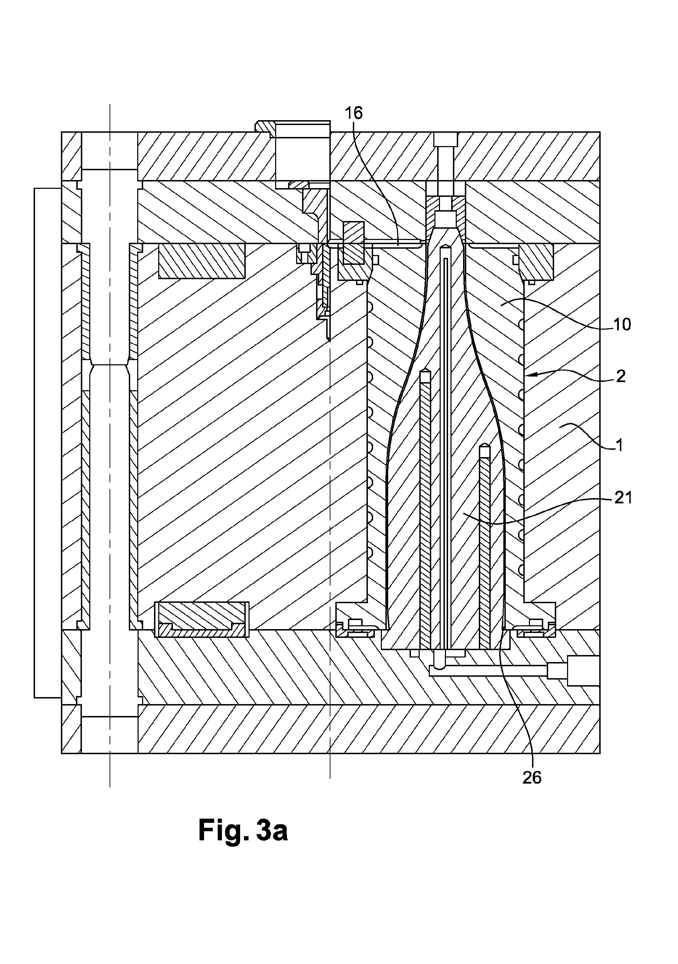

- la figure 3a est une vue en coupe du moule fermé constitué de la partie fixe de la figure 1 et de la partie mobile de la figure 2,

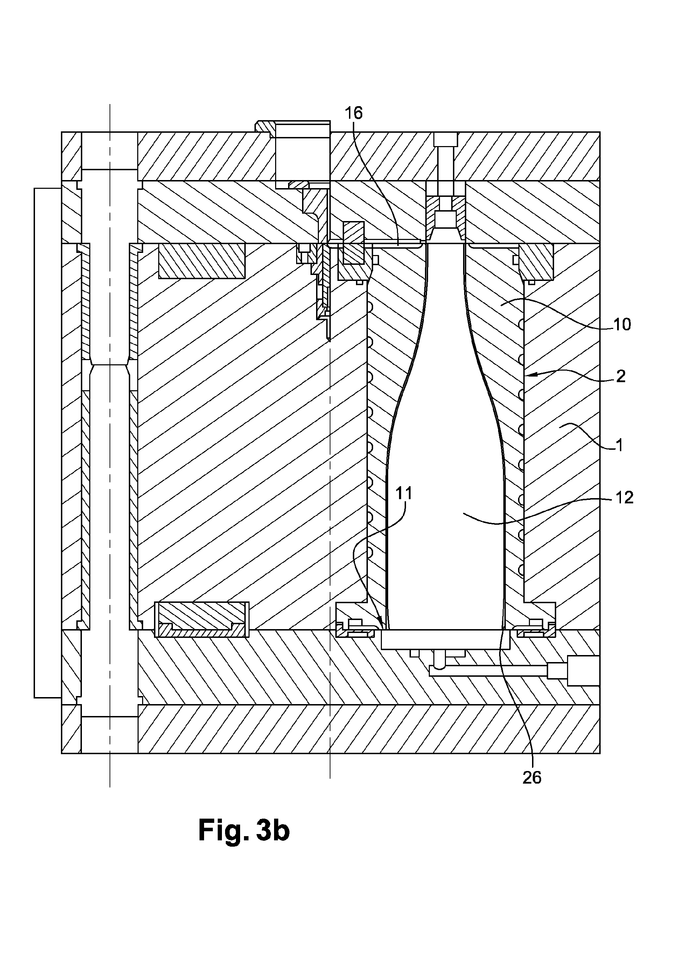

- la figure 3b est une vue en coupe de la partie fixe de la figure 1
- la figure 4 est une vue du moule en cours d'ouverture,
- les figures 5a à 5d montrent d'une bague du moule selon l'invention, dans différentes configurations.

### Description d'un mode de réalisation de l'invention

Le moule représenté sur les figures permet de réaliser simultanément quatre gaines 3.

La partie mobile 20 comprend essentiellement une partie sensiblement plane 22, sur laquelle peuvent être fixés quatre noyaux (un seul noyau 21 est représenté sur les figures). Le ou les noyaux ont une forme générale similaire à celle du contenant à recouvrir, dans l'exemple représenté la forme d'une bouteille. Le ou les noyaux comprennent chacun une base 23 fixée à la partie plane 22, un corps 24 et un col 25. Une contre-dépouille 26 est prévue à la base de chaque noyau.

La partie fixe du moule est constituée d'un bloc 1 sensiblement parallélépipédique et percé de quatre trous 2 dans lesquels sont insérés quatre matrices 10. Chaque matrice 10 est constituée d'un bloc (par exemple cylindrique ou parallélépipédique) dans lequel est creusé un évidement 12 débouchant sur une ouverture 13 d'une face principale 11 de la matrice. Lorsque les matrices 10 sont mises en place dans les trous 2 du bloc 1, les faces principales de toutes les matrices 10 et la face avant du bloc 1 sont dans un même plan et viennent en contact avec la partie plane 22 lorsque le moule est fermé. Chaque matrice 10 comprend un trou d'injection 16 débouchant au voisinage du col du noyau lorsque le moule est fermé.

Les évidements 13 des matrices 10 ont une forme inverse de celles des noyaux associés et ont des dimensions appropriées pour contenir les noyaux associés. Le jeu entre la matrice et le noyau définit naturellement l'épaisseur de la gaine obtenue après moulage. Ce jeu peut être de l'ordre de 0.1 à 3 mm ; dans l'exemple représenté, il est de l'ordre de 0.6 à 1 mm. Le jeu entre une matrice et le noyau associé au voisinage du col du noyau est dans l'exemple représenté supérieur au jeu entre une matrice et le noyau associé au voisinage du corps du noyau.

Chaque matrice comprend également des empreintes 14 (huit empreintes dans l'exemple représenté) débouchant dans l'évidement 12 et s'étendant depuis une circonférence de l'ouverture 13 dans un plan sensiblement parallèle à la face principale. Les empreintes ont dans l'exemple représenté une forme sensiblement parallélépipédique, de faible épaisseur. D'autres formes d'empreintes peuvent être envisagées, un demi-disque par exemple. Les empreintes 14 servent à mouler à la base de la gaine des ailettes utilisées pour démouler la gaine.

Chaque matrice comprend également une bague 15 s'étendant dans un plan sensiblement parallèle à la face principale. La bague comprend des créneaux 15a sur une circonférence de la bague ; la forme des créneaux 15a de la bague est adaptée à la forme des empreintes 14 de la matrice. La bague est montée rotative entre une position ouverte dans laquelle les créneaux de la bague se superposent aux empreintes de la matrice et une position fermée dans laquelle les créneaux sont décalés par rapport aux empreintes de la matrice, de sorte à obturer partiellement les empreintes. Un ergot de préhension 17 permet d'entraîner la bague en rotation.

Un marquage 27 est défini sur une surface externe du noyau. Dans l'exemple représenté, le marquage est gravé en relief sur le noyau. Le noyau est réalisé par exemple en acier sans souffre pour permettre un gravage chimique.

Selon l'effet recherché, le marquage peut aussi être gravé en creux, ou bien être réalisé par une différence de grain entre la surface définissant le marquage et la surface du reste du noyau.

Le moule comprend également des éléments pour fermer le moule, notamment :
- des ergots de positionnement 28 sur la partie mobile 20 et des trous correspondant 28 sur la partie fixe du moule
- des moyens 19, 29 de verrouillage pour maintenir associée la partie fixe et la partie mobile du moule.

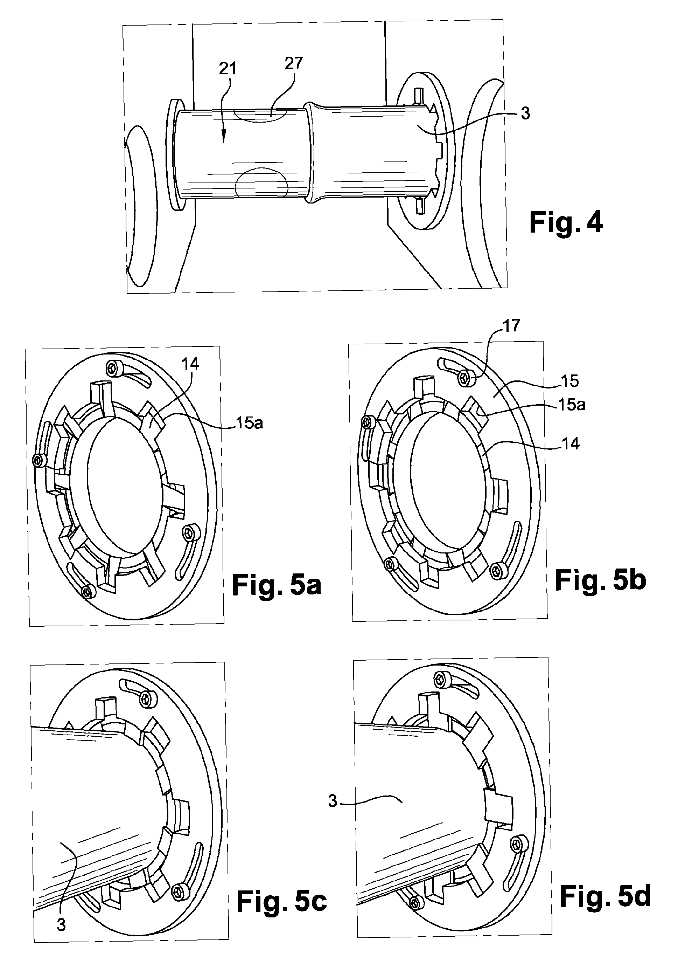

Le moule décrit ci-dessus permet de réaliser des gaines de la manière suivante. Initialement, le moule est ouvert et la bague en position ouverte (figure 5a).

Dans une première étape, la bague 15 de chaque matrice 10 est entraînée en rotation vers sa position fermée (figure 5b), pour obturer partiellement les empreintes des matrices. Les empreintes 14 de chaque matrice 10 sont ainsi uniquement ouvertes sur un petit côté débouchant dans l'évidement 13 de la matrice 10, pour permettre le remplissage des empreintes lors de l'étape suivante. Le moule est ensuite fermé à l'aide des moyens de positionnement 18, 28 et des moyens de verrouillage 19, 29.

Dans une deuxième étape, un plastique liquide est injecté dans le moule via le trou d'injection 16. L'espace entre chaque noyau 21 et la matrice 10 associée est rempli pour former la gaine. Les empreintes 14 sont également remplies pour former des ailettes à la base de la gaine. Le moule est maintenu fermé jusqu'à refroidissement et solidification de la gaine.

Dans une troisième étape, le moule est ouvert : les moyens 19, 29 sont déverrouillés et la partie mobile du moule (avec les noyaux) est retirée. Du fait de l'élasticité de la gaine, la gaine est maintenue "collée", plaquée sur le noyau. La bague étant verrouillée, les ailettes à la base de la gaine sont maintenues dans les empreintes 14. Lors du retrait du noyau, la gaine qui adhère au noyau est retournée à la façon d'une chaussette. De cette façon, la face de la gaine qui était en contact avec le noyau se retrouve à l'extérieur de la gaine. Un marquage gravé sur le noyau se retrouve ainsi sur la face externe visible de la gaine.

La figure 4 montre une vue du moule en cours d'ouverture : les ailettes 4 à la base de la gaine 3 sont maintenues par la bague 15 et la gaine 3 est en partie retournée. La figure 5c montre le moule ouvert, avec les ailettes 4 de la gaine 3 maintenues dans les empreintes de la matrice.

Dans une quatrième étape la bague est entraînée en rotation vers sa position ouverte (figure 5d), les ailettes sont libérées et la gaine peut être sortie du moule.

Si nécessaire, les ailettes de la gaine peuvent ensuite être découpées.

Un même moule peut être utilisé pour réaliser des gaines de formes différentes. Il suffit de changer une matrice et un noyau associé pour obtenir une gaine de forme différente. Il n'est pas nécessaire de changer complètement le moule.

### Nomenclature

- 1 bloc
- 2 trous
- 3 gaine
- 10 matrice
- 11 face principale de la matrice
- 12 évidement
- 13 ouverture de l'évidement sur la face principale
- 14 empreintes
- 15 bague
- 16 trou d'injection
- 17 : ergot de préhension
- 18 : moyens de positionnement
- 19 : moyens de verrouillage
- 20 partie mobile
- 21 noyau de la partie mobile
- 22 partie sensiblement plane de la partie mobile
- 23 base du noyau
- 24 corps du noyau
- 25 col du noyau
- 26 contre-dépouille à la base du noyau.
- 27 marquage sur une surface externe du noyau
- 28 : moyens de positionnement
- 29 moyens de verrouillage

## Revendications

1. Moule pour la fabrication d'une gaine pour un contenant par exemple une bouteille ou un flacon, le moule comprenant une matrice (10) comprenant une face principale (11) et une partie mobile (20) comprenant un noyau (21) de forme générale similaire à celle du contenant, la matrice présentant un évidement (12) débouchant sur une ouverture (13) de la face principale (11), ouverture par laquelle le noyau est inséré pour fermer le moule, l'évidement (12) ayant une forme générale inverse de la forme générale du noyau et a des dimensions appropriées pour contenir le noyau, la matrice présentant des empreintes débouchant dans l'évidement et sur la face principale, les dites empreintes s'étendant depuis une circonférence de l'ouverture dans un plan sensiblement parallèle à la face principale, le moule étant **caractérisé en ce que** :
• la matrice comprend également une bague (15) s'étendant dans un plan sensiblement parallèle à la face principale, la dite bague comprenant des créneaux sur une circonférence de la bague, la dite bague étant montée rotative entre une position ouverte dans laquelle les créneaux de la bague se superposent aux empreintes de la matrice et une position fermée dans laquelle les créneaux sont décalés par rapport aux empreintes de la matrice, de sorte à obturer partiellement les empreintes.

2. Moule selon la revendication 1, dans lequel la matrice est réalisée d'une seule pièce.

3. Moule selon l'une des revendications 1 ou 2, dans lequel la matrice comprend 4 à 12 empreintes, et de préférence 8 empreintes, réparties sur la circonférence de l'ouverture (13).

4. Moule selon l'une des revendications précédentes, dans lequel la partie mobile (20) du moule comprend une partie (22) sensiblement plane destinée à venir en appui sur la face principale (11) lorsque le noyau (21) est inséré dans l'évidement de la matrice et dans lequel le noyau comprend une base (23) fixée à la partie plane (22), un corps (24) et un col (25).

5. Moule selon la revendication 4, dans lequel la base du noyau présente une contre-dépouille (26).

6. Moule selon l'une des revendications 4 ou 5, dans lequel un jeu entre la matrice et le noyau au voisinage du col du noyau est supérieur à un jeu entre la matrice et le noyau au voisinage du corps du noyau.

7. Moule selon l'une des revendications 4 à 6, dans lequel la matrice comprend un trou d'injection (16) débouchant au voisinage du col du noyau lorsque le moule est fermé.

8. Moule selon l'une des revendications 4 à 6 dans lequel, lorsque le noyau est inséré dans l'évidement de la matrice, un jeu entre le noyau et la matrice est de l'ordre de 0.1 à 3 mm.

9. Moule selon l'une des revendications précédentes, dans lequel un marquage (27) est défini sur une surface externe du noyau.

10. Procédé de moulage par injection plastique d'une gaine pour un contenant, par exemple de type bouteille ou flacon, **caractérisé en ce qu'**il comprend les étapes suivantes :
• fermeture d'une bague d'un moule conforme à l'une des revendications 1 à 9, et fermeture du moule,
• injection d'une matière plastique dans le moule,
• ouverture du moule et retrait du noyau de la matrice, et
• ouverture de la bague pour libérer la gaine moulée.

## Patentansprüche

1. Gussform für die Herstellung einer Hülle für einen Behälter, wie eine Flasche oder ein Fläschchen, wobei die Gussform eine Matrize (10) umfasst, die eine Hauptfläche (11) und einen beweglichen Teil (20) umfasst, der einen Kern (21) umfasst, dessen allgemeine Form ähnlich derjenigen des Behälters ist, wobei die Matrize eine Aussparung (12) umfasst, die in eine Öffnung (13) der Hauptfläche (11) ausmündet, durch welche Öffnung der Kern eingeführt wird, um die Gussform zu schliessen, wobei die Aussparung (12) eine allgemeine, zur allgemeinen Form des Kerns inverse Form und Abmessungen aufweist, die geeignet sind, um den Kern aufzunehmen, wobei die Matrize Vertiefungen umfasst, die in die Aussparung und auf der Hauptfläche ausmünden, wobei die besagten Vertiefungen sich von einem Umfang der Öffnung in einer Ebene erstrecken, die im wesentlichen parallel zur Hauptfläche ist, wobei die Gussform **dadurch gekennzeichnet ist, dass**:
• die Matrize ebenfalls einen Ring (15) umfasst, der sich in einer Ebene im wesentlichen parallel zu der Hauptfläche erstreckt, wobei der besagte Ring Nuten in einem Umfang des Ringes umfasst, wobei der besagte Ring drehbar zwischen einer offenen Position, in der die Nuten des Ringes die Vertiefungen der Matrize überlagern, und einer geschlossenen Position, in der die Nuten relativ zu den Vertiefungen der Matrize versetzt sind, gelagert ist, so dass die Vertiefungen teilweise geschlossen werden.

2. Gussform nach Anspruch 1, bei der die Matrize einstückig gefertigt ist.

3. Gussform nach einem der Ansprüche 1 oder 2, bei der die Matrize 4 bis 12 Vertiefungen, und vorzugsweise 8 Vertiefungen, umfasst, die über den Umfang der Öffnung (13) verteilt sind.

4. Gussform nach einem der vorhergehenden Ansprüche, bei der der bewegliche Teil (20) der Gussform einen im wesentlichen flachen Teil (22) umfasst, der dazu bestimmt ist, an der Hauptfläche (11) anzuliegen, wenn der Kern (21) in der Aussparung der Matrize eingeführt ist, und bei der der Kern eine an dem flachen Teil (22) befestigte Basis (23), einen Körper (24) und einen Hals (25) umfasst.

5. Gussform nach Anspruch 4, bei der die Basis des Kerns eine Hinterschneidung (26) aufweist.

6. Gussform nach einem der Ansprüche 4 oder 5, bei der ein Spiel zwischen der Matrize und dem Kern in der Nähe des Halses des Kerns größer als ein Spiel zwischen der Matrize und dem Kern in der Nähe des Körpers des Kerns ist.

7. Gussform nach einem der Ansprüche 4 bis 6, bei der die Matrize ein Einspritzloch (16) umfasst, das in der Nähe des Halses des Kerns ausmündet, wenn die Gussform geschlossen ist.

8. Gussform nach einem der Ansprüche 4 bis 6, bei der, wenn der Kern in die Aussparung der Matrize eingeführt ist, ein Spiel zwischen dem Kern und der Matrize in der Größenordnung von 0,1 bis 3 mm ist.

9. Gussform nach einem der vorhergehenden Ansprüche, bei der eine Markierung (27) auf einer äußeren Oberfläche des Kerns definiert ist.

10. Verfahren zum Spritzgießen einer Kunststoffhülle für einen Behälter, beispielsweise der Art Flasche oder Fläschschen, **dadurch gekennzeichnet, dass** es folgende Schritte umfasst:
• Schließen eines Ringes einer Gussform nach einem der Ansprüche 1 bis 9, und Schließen der Gussorm,
• Einspritzen eines Kunststoffmaterials in die Gussform,
• Öffnen der Gussform und Herausnehmen des Kerns der Matrize, und
• Öffnen des Ringes, um die gegossene Hülle herauszunehmen.

## Claims

1. A mold for manufacturing a sheath for a container such as for example a bottle or a flask, the mold comprising a die (10) comprising a main face (11) and a movable part (20) comprising a core (21) having a general shape similar to that of the container, the die having a recess (12) ending into an opening (13) of the main face (11), through which opening the core is inserted in order to close the mold, the recess (12) having a general shape that is the inverse of the general shape of the core and has dimensions suitable for containing the core, the die having indentations ending into the recess and on the main face, said indentations extending from a circumference of the opening in a plane substantially parallel to the main face, the mold being **characterized in that**:
• the die also comprises a ring (15) extending in a plane substantially parallel to the main face, said ring comprising slots on a circumference of the ring, said ring being mounted rotationally between an open position, in which the slots of the ring are superposed on the indentations of the die, and a closed position, in which the slots are shifted relative to the indentations of the die, so as to partially close the indentations.

2. The mold according to claim 1, wherein the die is made of one single part.

3. The mold according to one of claims 1 or 2, wherein the die comprises 4 to 12 indentations, and preferably 8 indentations, distributed over the circumference of the opening (13).

4. The mold according to one of the preceding claims, wherein the movable part (20) of the mold comprises a substantially planar portion (22) intended to bear against the main face (11) when the core (21) is inserted into the recess of the die, and wherein the core comprises a base (23) attached to the planar portion (22), a body (24) and a neck (25).

5. The mold according to claim 4, wherein the base of the core has an undercut (26).

6. The mold according to one of claims 4 or 5, wherein a backlash between the die and the core proximate the neck of the core is larger than a backlash between the die and the core proximate the body of the core.

7. The mold according to one of claims 4 to 6, wherein the die comprises an injection hole (16) ending proximate the neck of the core when the mold is closed.

8. The mold according to one of claims 4 to 6, wherein, when the core is inserted into the recess of the die, a backlash between the core and the die is within the range of 0.1 to 3 mm.

9. The mold according to one of the preceding claims, wherein a marking (27) is defined on an outer surface of the core.

10. A method for injection molding of a plastic sheath for a container, for example such as a bottle or a flask, **characterized in that** it comprises the following steps:
• closing a ring of a mold according to one of claims 1 to 9, and closing the mold,
• injecting a plastic material into the mold,
• opening the mold and removing the core from the die, and
• opening the ring to release the molded sheath.
